# EUROPEAN PATENT SPECIFICATION

(11) **EP 2 416 552 B1**
(45) Date of publication and mention of the grant of the patent: **02.03.2016**
(21) Application number: 10758541.6
(22) Date of filing: 25.03.2010
(51) Int. Cl.: H04W 4/02

(54) **MOBILE DEVICE, COMMUNICATION SYSTEM AND COMMUNICATION METHOD**
MOBILGERÄT, KOMMUNIKATIONSSYSTEM UND KOMMUNIKATIONSVERFAHREN
DISPOSITIF MOBILE, SYSTÈME DE COMMUNICATION ET PROCÉDÉ DE COMMUNICATION

(30) Priority: 01.04.2009 JP 2009089121
(43) Date of publication of application: 08.02.2012
(73) Proprietor: NTT DOCOMO, INC., Chiyoda-ku Tokyo 100-6150 (JP)
(72) Inventor: SUZUKI, Toshihiro, Tokyo 100-6150 (JP); OKAJIMA, Ichiro, Tokyo 100-6150 (JP); KAWAKAMI, Hiroshi, Tokyo 100-6150 (JP); JO, Manhee, Tokyo 100-6150 (JP); OCHI, Daisuke, Tokyo 100-6150 (JP); NAGATA, Tomohiro, Tokyo 100-6150 (JP); KOBAYASHI, Motonari, Tokyo 100-6150 (JP); OYABU, Yuki, Tokyo 100-6150 (JP)
(74) Representative: Viering, Jentschura & Partner mbB Patent- und Rechtsanwälte
(86) International application number: PCT/JP2010/055259
(87) International publication number: WO 2010/113768

(56) References cited:
- WO-A1-01/69951
- GB-A- 2 404 115
- JP-A- 2002 330 197
- JP-A- 2004 140 709
- JP-A- 2004 208 183
- JP-A- 2004 336 532
- JP-A- 2005 005 827
- JP-A- 2006 260 264
- US-A1- 2005 174 283
- US-A1- 2006 025 157

## Description

### Technical Field

The present invention relates to a mobile device, a communication system and a communication method that perform measurements of location information.

### Background Art

A method for collecting location information is specified in the 3GPP, for example, where upon receiving a request from an external server to collect location information of each mobile device, a management server of a carrier operator outputs, in accordance with the request, an instruction to collect the location information of each mobile device to an exchanger (for example, a mobile multimedia switching system (MMS) / a serving/gateway general packet radio service support node (xGSN) and a remote network controller (RNC)) and each node and the controller perform processing to collect the location information. This processing sequence is specified in the 3rd generation partnership project (3GPP) as a mobile terminated-location request (MT-LR) method and is described in Non Patent Literature 1, the 3rd generation partnership project (3GPP) TS23.271, for example. Further attention is drawn to the document WO 01/69951 A1.

### Citation List

### Non Patent Literature

Non Patent Literature 1: 3rd generation partnership project (3GPP) TS23.271

### Summary of Invention

### Technical Problem

In a technology described in Non Patent Literature 1, however, making a request for measurements of the location in a certain area is impossible and a processing load is imposed on the mobile device and a network.

The present invention aims to provide a mobile device, a communication system and a communication method that enable to collect location information without imposing a load on the mobile device and the network.

### Solution to Problem

Aspects of the invention are disclosed by the independent claims.

In order to solve the problems described above, a mobile device of the present invention includes: positioning area storage means for storing a positioning area; determining means for determining based on a notification signal from a base station to be located in the positioning area stored in the positioning area storage means; positioning means for performing measurements of the location when the determining means determines to be located in the positioning area; and notifying means for notifying location information measured by the positioning means.

In another embodiment, a communication method of the present invention includes: a storage step of storing a positioning area in positioning area storage means; a determining step of determining based on a notification signal from a base station to be located in the positioning area stored in the positioning area storage means; a positioning step of performing measurements of the location when it is determined at the determining step to be located in the positioning area; and a notifying step of notifying location information measured at the positioning step.

According to the invention, when it is determined based on the notification signal from the base station to be located in the positioning area stored, measurements of the location is performed and location information thus measured is able to be notified. Thereby, a management center is capable of collecting the location information of the mobile device located in a given area and it is possible to realize processing to efficiently collect the location information by reducing a load on the mobile device and a network.

Furthermore, in the mobile device of the present invention, the positioning area storage means preferably stores a cell ID as the positioning area. According to the invention, the positioning area may be identified by the cell ID.

Furthermore, the mobile device of the present invention may further include positioning time storage means for storing a time period to perform measurements of the location and time measuring means for measuring a time; when the determining means determines to be located in a positioning area and further determines that the time measured by the time measuring means is included in the time period stored in the positioning time storage means, the positioning means preferably performs measurements of the location.

According to the invention, when it is determined to be in the positioning area and it is further determined that the currently measured time is included in the time period previously stored, measurements of the location can be performed and a management center is capable of collecting location information of the mobile device located in a given area. Additionally, it is possible to realize processing to efficiently collect the location information by reducing a load on the mobile device and the network. Furthermore, by acquiring the location information in a given time period, it is possible to collect more detailed location information.

In another embodiment, a mobile device of the present invention includes: positioning time storage means for storing a time period to perform positioning; time measuring means for measuring a time; determining means for determining whether the time measured by the time measuring means is included in the time period stored in the positioning time storage means; positioning means for performing measurements of the location when the determining means determines that the time measured by the time measuring means is included in the time period; and notifying means for notifying location information measured by the positioning means.

According to the invention, when it is determined that a currently measured time is included in the time period previously stored, measurements of the location is performed and notifies location information thus measured, it is possible to collect location information of the mobile device in a given time period and it is possible to realize processing to efficiently collect location information by reducing a load on the mobile device and the network.

In another embodiment, a mobile device of the present invention includes: receiving means for receiving a cell broadcast service (CBS) message including a positioning area; determining means for determining whether the positioning area included in the CBS message received by the receiving means is a currently located positioning area; positioning means for performing measurements of the location when it is determined by the determining means that the positioning area is the currently located positioning area; and notifying means for notifying location information measured by the positioning means.

According to the invention, when a cell broadcast service (CBS) message including the positioning area is received and it is determined that the positioning area included in the received CBS message is the currently located positioning area, measurements of the location is performed and location information thus measured is able to be notified. Thereby, the management center is capable of collecting the location information of the mobile device located in a given area and it is possible to realize processing to efficiently collect the location information by reducing a load on the mobile device and the network.

Furthermore, in the mobile device of the present invention, the CBS message may include a positioning area and a positioning time and when the determining means determines that the positioning area included in the CBS message includes a currently located positioning area and a current time is included in the positioning time included in the CBS message, the positioning means preferably performs measurements of the location.

In another embodiment, a communication method of the present invention includes: a receiving step of receiving a cell broadcast service (CBS) message including a positioning area; a determining step of determining whether the positioning area included in the CBS message received at the receiving step is a currently located positioning area; a positioning step of performing measurements of the location when it is determined at the determining step to be the currently located positioning area; and a notifying step of notifying location information measured at the positioning step.

According to the invention, when it is determined that the positioning area included in the CBS message includes the currently located positioning area and the current time is included in the positioning time included in the CBS message, measurements of the location is performed and thereby, the management center is capable of collecting location information of the mobile device located in a given area in a given time period and it is possible to realize processing to efficiently collect location information by reducing a load on the mobile device and the network. Furthermore, by acquiring the location information in a given time period, it is possible to collect more detailed location information.

In another embodiment, a communication system of the present invention includes the mobile device mentioned above and a location information storage apparatus for storing location information transmitted from the mobile device.

Thereby, it is possible to grasp the location information in the mobile device, to perform statistical processing etc., on the grasped location information and to provide data obtained by statistical processing outside.

### Advantageous Effects of Invention

According to the present invention, the management center is capable of collecting location information of the mobile device located in a given area and it is possible to realize processing to efficiently collect location information by reducing a load on the mobile device and the network.

### Brief Description of Drawings

[Fig. 1] Fig. 1 is a system block diagram of a communication system 10 of a first embodiment.
[Fig. 2] Fig. 2 is a block diagram illustrating a function of a mobile device 100 of the first embodiment.
[Fig. 3] Fig. 3 is a diagram for describing a positioning management table.
[Fig. 4] Fig. 4 is a sequence diagram illustrating processing to register positioning management information between the mobile deices 100 and a management center 500.
[Fig. 5] Fig. 5 is a sequence diagram illustrating processing to perform measurements of the location based on a notification signal from a base station 200.
[Fig. 6] Fig. 6 is a flowchart illustrating processing from S201 to S203 for determining necessity of measurements of the location.
[Fig. 7] Fig. 7 is a system block diagram of a communication system 10a of a second embodiment.
[Fig. 8] Fig. 8 is a block diagram illustrating a function of a mobile device 100a of the second embodiment.
[Fig. 9] Fig. 9 is a conceptual diagram of information included in a CBS message.
[Fig. 10] Fig. 10 is a sequence diagram illustrating processing of the mobile device 100a of the second embodiment.
[Fig. 11] Fig. 11 is a flowchart illustrating positioning determining processing using a cell ID and a positioning performance end time in the CBS message.

### Reference Signs List

10, 10a... communication system, 100, 100a... mobile device, 101, 101a... communication module, 101b... message receiving module, 101c... notifying module, 102... storage module, 103, 103a... determining module, 104... timer, 105, 105a... positioning module, 200... base station, 400... exchanger, 500... management center, 501... social sensor unit, 502... peta-mining unit, 503... mobile demography unit, 504... visualization solution unit

### Description of Embodiments

With reference to accompanying drawings, embodiments of the present invention will be described. Whenever possible, the same reference sign is given to the same part and redundant explanation will be omitted.

### [First Embodiment]

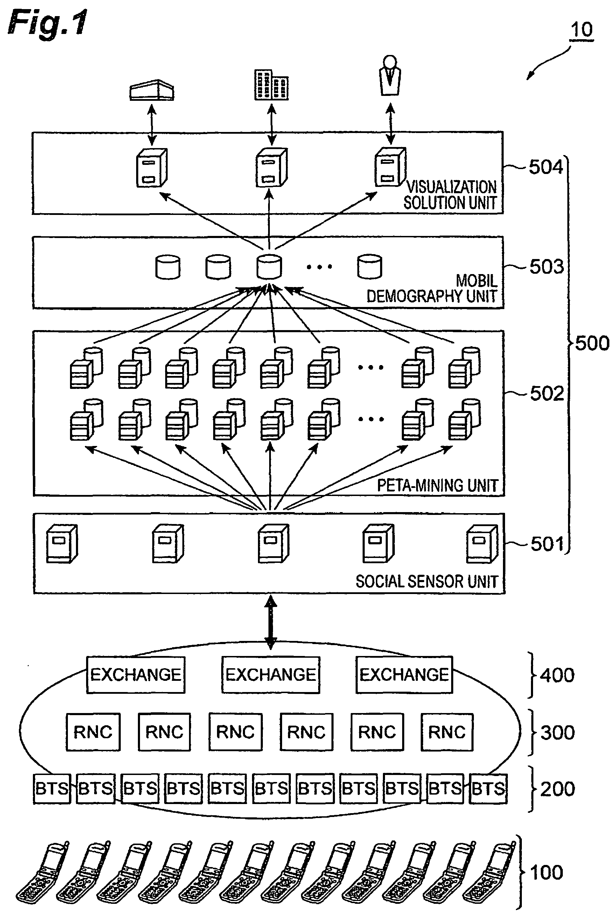

Fig. 1 is a system block diagram of a communication system 10 of the first embodiment. As illustrated in Fig. 1, the communication system 10 is configured to include mobile devices 100, BTSes (Base Transceiver Stations) 200, RNCs (Remote Network Controllers) 300, exchangers 400, and a management center 500. Moreover, the management center 500 is configured with social sensor units 501, peta-mining units 502, mobile demography units 503, and visualization solution units 504.

Before collecting location information of the mobile devices 100 through the exchangers 400, the BTSes 200 and the RNCs 300, the management center 500 transmits a cell ID and positioning performance time information to the mobile devices 100. Upon receiving the cell ID and the positioning performance time information, the mobile devices 100 store the cell ID and the positioning performance time information and perform measurements of the location when being located in a base station area defined by the cell ID in a time period defined by the positioning performance time information.

Moreover, as described above, the management center 500 is configured to include the social sensor units 501, the peta-mining units 502, the mobile demography units 503, and the visualization solution units 504. Location information of the mobile devices 100 is stored at least in any one unit of each unit serving as location information storage apparatus and the stored location information is used to perform statistical processing.

Each of the social sensor units 501 is a server apparatus for collecting data including the location information of the mobile device 100 and the like from each exchanger 400. The social sensor unit 501 is configured to be capable of receiving data regularly output from the exchanger 400 and of acquiring data from the exchanger 400 at a timing predetermined by the social sensor unit 501.

Each of the peta-mining units 502 is a server apparatus for converting the data received from the social sensor unit 501 to a given data form. For example, the peta-mining unit 502 performs sorting processing by a user ID and performs sorting processing by each area.

Each of the mobile demography units 503 is a server apparatus for performing aggregation processing of the data processed in the peta-mining unit 502, that is for performing counting processing in each item. For example, the mobile demography unit 503 is capable of counting the number of users located in a certain area and of aggregating a distribution of user locations.

Each of the visualization solution units 504 is a server apparatus for performing processing to visualize the data aggregation processed in the mobile demography unit 503. For example, the visualization solution unit 504 is capable of performing processing to map the aggregated data on a map. The data processed in the visualization solution unit 504 is provided to businesses, public sectors, individuals and the like and used for store development, a road traffic survey, disaster measures, environmental measures and the like. It should be noted those statistically processed information are, of course, processed not to violate privacy such that an individual or the like is unable to be identified.

It should be noted that an operator operates any one of the social sensor units 501, the peta-mining units 502, the mobile demography units 503 and the visualization solution units 504 described above to set store positioning management information (a cell ID and positioning performance time information) and transmit thereof to the mobile device 100 may cause the mobile device 100 to store the positioning management information.

Moreover, in above description of Fig. 1, the description is made assuming a mobile communication network specified in the 3GPP, but the present embodiment is not limited to the mobile communication network specified in the 3GPP. A personal handy phone system (PHS), a communication standard IEEE 802.11 series (IEEE 802.11a/IEEE 802.11b) (Wi-Fi), or a worldwide interoperability for microwave access (WiMax) may be used. For example, in an embodiment using Wi-Fi, there is an access point in place of the base station and a beacon signal (that corresponds to a notification signal in the mobile communication network) may be used to collect location information of each terminal.

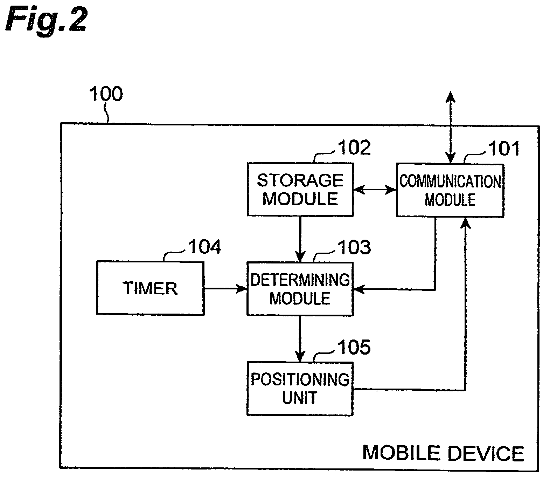

Next, a description will be given on the mobile device 100. Fig. 2 is a block diagram illustrating a function of the mobile device 100. The mobile device 100 is configured to include a communication module 101 (notifying means), a storage module 102 (positioning area storage means, positioning time storage means), a determining module 103 (determining means), a timer 104 (time measuring means) and a positioning module 105 (positioning means). The mobile device 100 may be configured with a CPU, a RAM, a ROM, a wireless communication module, a positioning module and the like and in accordance with a program stored in the ROM, the CPU, the wireless communication module and the positioning module and the like operate.

The communication module 101 is a module for communicating with another communication terminal and further in the present embodiment, is a module for receiving positioning management information including the cell ID and the positioning performance time information that are specified by the management center 500. Moreover, the communication module 101 is a module for receiving a notification signal including the cell ID from a base station 200 placed in each area and for transmitting location information that is a measurements result of location performed based on the cell ID included in the notification signal to the management center 500. It should be noted that the management center 500 may be previously set as a transmission destination or the information described in the positioning management information may be stored and used.

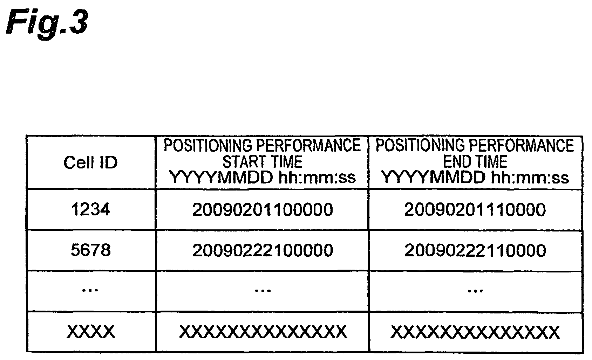

The storage module 102 is a module for storing a positioning management table that describes the positioning management information received from the communication module 101. Fig. 3 is a diagram illustrating the positioning management table. As illustrated in Fig. 3, in the positioning management table, the cell ID and the positioning performance time information (including start time and end time) that were transmitted as the positioning management information are related with each other and stored. For example, the cell ID "1234" and the positioning performance time 10:00 a.m. to 11:00 a.m. on February 1, 2009 are stored and the mobile device 100 performs measurements of the location when being located in an area defined by the cell ID in a time period defined by the positioning performance time information.

The determining module 103 is a module for determining based on a predetermined measurements condition whether to perform measurements of the location or not, when receiving a notification signal (including the cell ID) through the communication module 101. For example, when the notification signal including the cell ID is received by the communication module 101, the determining module 103 determines whether the ID included in the notification signal agrees with a cell ID stored in the storage module 102 and further determines whether a current time is in a time period defined by the positioning performance time information.

It should be noted that it is determined based on a time measured by the timer 104 whether to be in the time period defined by the positioning performance time information or not. It should be noted that determination here is made based on both the cell ID and the positioning performance time information, but it may be determined based on any one of them only whether measurements of the location is necessary or not. Moreover, when it is determined that it is past a positioning performance end time defined in the positioning performance time information, such a record is deleted from the storage module 102.

The positioning module 105 is a module for performing measurements of the location in accordance with a determination result of the determining module 103. For example, the positioning module 105 performs positioning by a global positioning system (GPS).

In this way, the mobile device 100 is capable of efficiently performing measurements of the location in accordance with the positioning management table stored in the storage module 102.

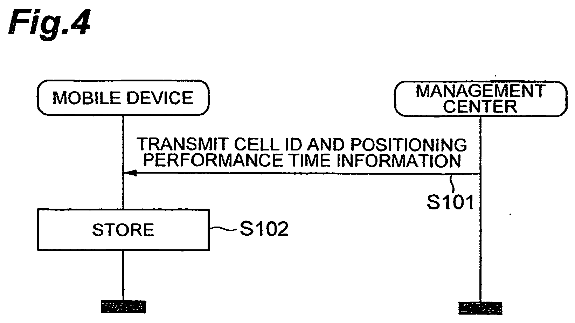

Next, operation of the communication system 10 of the present embodiment will be described. Fig. 4 is a sequence diagram illustrating registration processing of the positioning management information by the mobile device 100 and the management center 500. First, in the management center 500, positioning management information is set and transmitted. Here, a cell ID and positioning performance time information are transmitted (S101). The mobile device 100 causes the storage module 102 to store the positioning management information (S102).

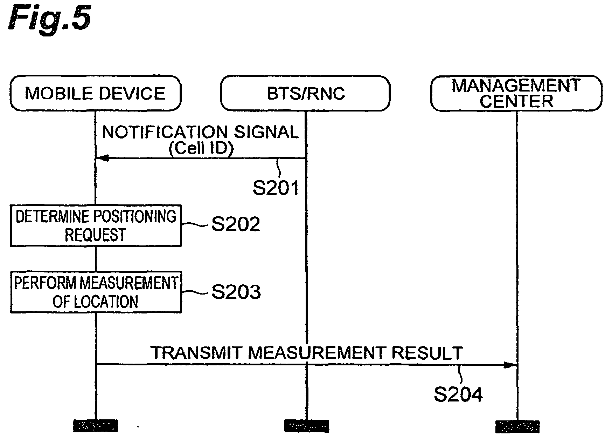

Next, a description will be given on processing when measurements of the location is performed based on the notification signal from the base station 200. Fig. 5 is a sequence diagram illustrating the processing at that time. A notification signal is periodically transmitted from the base station 200 (S201). In the mobile device 100, the notification signal is received by the communication module 101 and it is determined by the determining module 103 whether measurements of the location is necessary or not (S202). That is, when it is determined by the determining module 103 that a cell ID included in the notification information agrees with a cell ID stored in the storage module 102 and positioning performance time information included in the notification information includes a time currently measured by the timer 104, measurements of the location is determined to be necessary. Then, measurements of the location is performed by the positioning module 105 (S203) and location information measured is transmitted by the communication module 101 1 to the management center 500 (S204).

It should be noted that, in Fig. 5, once measurements of the location is performed, a measurements result of location is immediately transmitted, but as batch processing, the result may be stored in the mobile device 100 and collectively transmitted at a given timing.

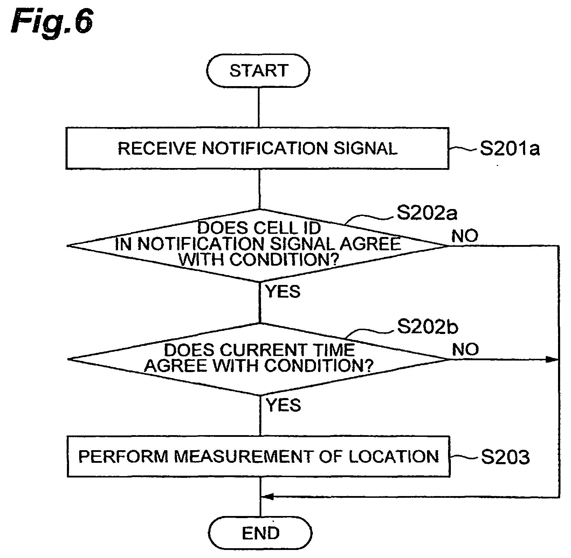

Here, with reference to a flowchart, a more detailed description will be given on the processing S201 to S203 described above. Fig. 6 is the flowchart illustrating processing to determine whether measurements of the location is necessary or not at S201 through S203.

The notification signal is received by the communication module 101 (S201a) and it is determined by the determining module 103 whether the cell ID included in the notification signal agrees with a condition stored in the storage module 102 (that is the positioning management information) (S202a). When it is determined to agree here, it is further determined by the determining section 103 whether a current time measured by the timer 104 agrees with the condition (that is the positioning management information) stored in the storage module 102 or not (S202b). When it is determined to agree here, the positioning module 105 performs measurements of the location (S203).

In this way, the measurements of the location is performed based on the cell ID and the time in the mobile device 100.

Next, an operation and effect of the mobile device 100 of the present embodiment will be described. In the mobile device 100, the communication module 101 receives a notification signal including a cell ID from the base station 200 and the determining module 103 determines whether the cell ID included in the notification signal agrees with a cell ID stored in the storage module 102. Then, the positioning module 105 performs measurements of the location and the communication module 101 notifies location information thus measured. Thereby, the management center 500 is capable of collecting the location information of the mobile device 100 located in a given area and it is possible to realize processing to efficiently collect the location information by reducing a load on the mobile device 100 and a network.

Moreover, in the mobile device 100, when the determining module 103 determines to be located in a cell (positioning area) defined by the cell ID and furthermore determines that a measured current time is included in a time period stored in the storage module 102, the positioning module 105 can perform measurements of the location. Thereby, the management center 500 is capable of collecting the location information of the mobile device 100 located in a given area in a given time period and it is possible to realize processing to efficiently collect the location information by reducing a load on the mobile device 100 and the network. Furthermore, by acquiring the location information in a given time period, it is possible to collect more detailed location information.

Furthermore, in the mobile device 100, the determining module 103 may determine based on a current time measured by the timer 104 whether measurements of the location is necessary or not, instead of determining the area being located, that is instead of determining the cell ID. For example, when the determining module 103 determines that the current time is included in a time period previously stored in the storage module 102, the positioning module 105 can perform measurements of the location and location information thus measured may be notified by the communication module 101. Accordingly, it is possible to collect the location information of the mobile device 100 in a given time period and to realize processing to efficiently collect the location information by reducing a load on the mobile device and the network.

### [Second Embodiment]

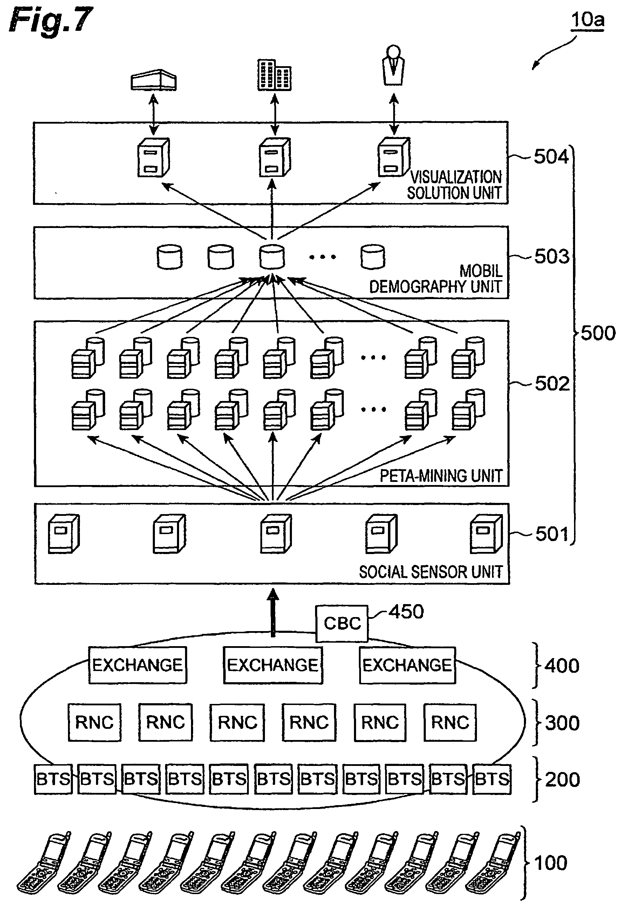

Next, a communication system 10a of a second embodiment will be described. Fig. 7 is a system block diagram of the communication system 10a of the second embodiment. The communication system 10a is configured to include a cell broadcast center (CBC) 450 in addition to the configuration of the communication system 10. The CBC 450 is a server apparatus for transmitting to the mobile device 100 located in a cell specified in the management center 500 and is the server apparatus for performing transmission processing for each cell unit based on an instruction from the management center 500.

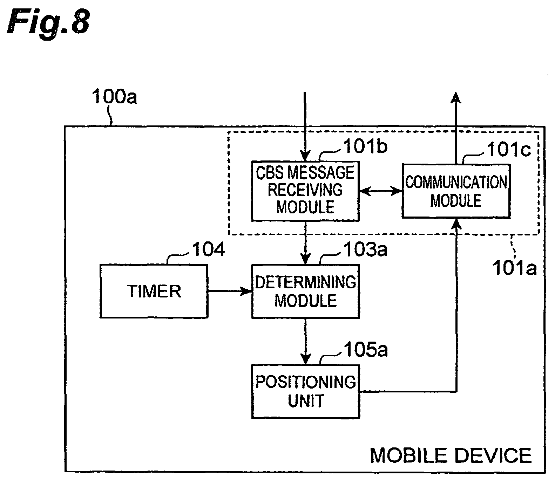

A description will be given on a mobile device 100a for receiving a CBS message from the CBC 450. Fig. 8 is a block diagram illustrating a function of the mobile device 100a of the second embodiment. As illustrated in Fig. 8, the mobile device 100a is configured to include a communication module 101a (a CBS message receiving module 101b (receiving means), a notifying module 101c (notifying means)), a determining module 103a (determining means), a timer 104, and a positioning module 105a (positioning means). Similar to the mobile device 100, the mobile device 100a includes a CPU, a RAM, a ROM, a wireless communication module, a positioning module and the like and each module operates in accordance with a program.

The CBS message receiving module 101b is a module for receiving a CBS message transmitted from the CBC 450. The CBC message is the broadcasting technology standardized in the 3GPP and the CBC 450 is capable of transmitting a message to a given area unit (a cell unit and the like) in a time of emergency. In the present embodiment, positional management information indicating a cell ID and positioning performance end time is included in the CBS message and the mobile device 100a is configured to be capable of receiving the CBS message.

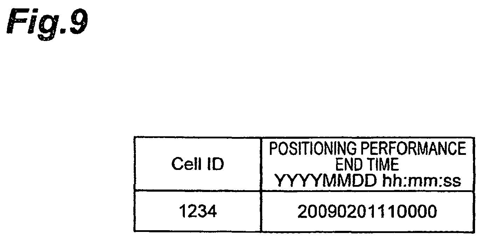

Here, with reference to Fig. 9, a description will be given on information included in the CBS message. Fig. 9 is a conceptual diagram thereof. As illustrated in Fig. 9, the cell ID and the positioning performance end time are related to each other and included in the CBS message. It should be noted that described here is the positioning performance end time, but not limited thereto. A lapse time from a measurements start or a time indicating an interval between the measurements of the location may be set thereto.

The notifying module 101c is a module for notifying the management center 500 of a measurements result of location measured by the positioning module 105a through transmission thereof.

The determining module 103a is a module for determining whether to perform measurements of the location or not by comparing the cell ID and the positioning performance end time that are included in the CBS message received by the CBS message receiving module 101b with a cell ID of an area where the mobile device 100a is currently located and a current time measured by the timer 104, respectively. For example, the determining module 103a determines whether the cell ID included in the CBS message agrees with the cell ID of a cell (area) where the mobile device 100a is currently located and when it is determined to agree, further determines whether the time measured by the timer 104 is past the positioning performance end time included in the CBS message. When it is determined that it is not past the time yet, measurements of the location is determined to be performed. It should be noted that when it is determined that the time is past the positioning performance end time, the determining module 103a deletes the positioning management information.

The positioning module 105a is a module for performing measurements of the location when it is determined in the determining module 103a to perform measurements of the location

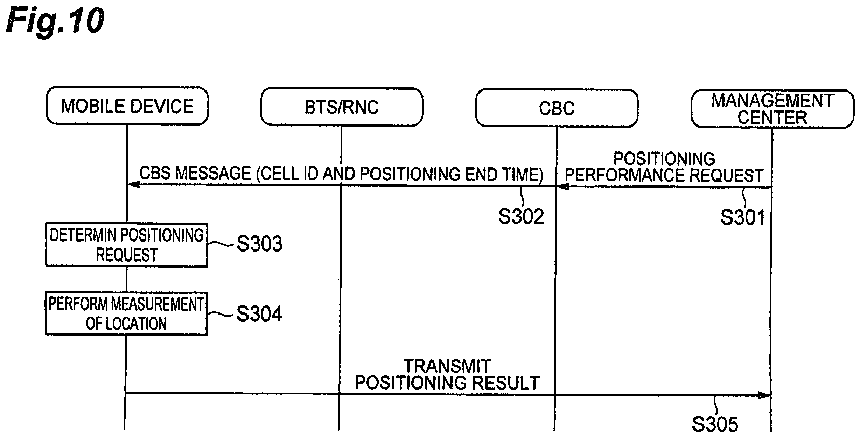

Next, a description will be given on processing of the mobile device 100a thus configured. Fig. 10 is a sequence diagram illustrating processing of the mobile device 100a of the present embodiment. As illustrated in Fig. 10, a request for measurements of the location is transmitted from the management center 500 to the CBC 450 (S301). In the CBC 450, a cell ID and a positioning performance end time that were specified in the management center 500 are added to a CBS message and the CBS message is transmitted to the mobile device 100a and the like (S302).

In the mobile device 100a, when the CBS message is received, it is determined based on the cell ID and the positioning performance end time that are included in the CBS message by the determining module 103a whether to perform measurements of the location or not (S303). When it is determined to perform measurements of the location here, measurements of the location is performed by the positioning module 105a (S304) and a measurements result of location is transmitted to the management center 500 (S305).

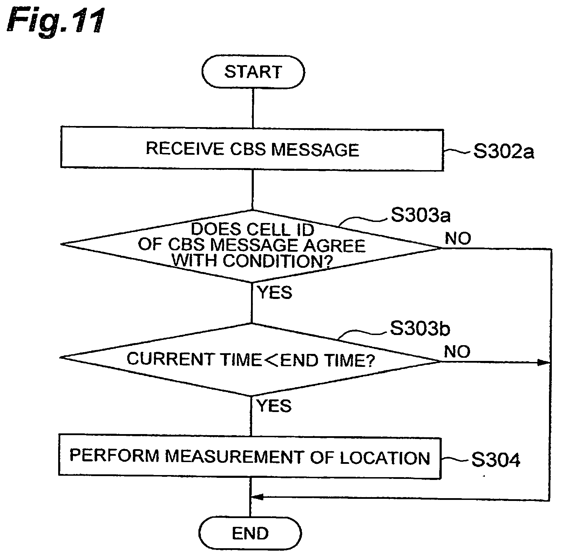

Here, a more detailed description will be given on processing from S302 to S304. Fig. 11 is a flowchart illustrating determination processing for measurements of the location using the cell ID and the positioning performance end time in the CBS message.

As illustrated in Fig. 11, when the CBS message is received by the CBS message receiving module 101b (S302a), it is determined by the determining module 103a whether the cell ID in the CBS message satisfies a measurements condition or not (S303a). When it is determined to be yes, next it is determined by the determining module 103a whether it is past the positioning performance end time in the CBS message (S303b). Here, when it is determined that it is not past the time, measurements of the location is performed by the positioning module 105 (S304).

In this way, the CBS message can be used to cause the mobile device 100a to perform measurements of the location of the mobile device 100a. Since the CBS message is transmitted to a given area, it is possible to reduce a load on the network and in addition to that, not every mobile device requires processing, so it is possible to reduce a load on the mobile device.

Next, action effect of the mobile device 100a of the second embodiment will be described. In the mobile device 100a, when the CBS message receiving module 101b receives a cell broadcast service (CBS) message including a positioning area and the determining module 103 a determines that a cell ID (positioning area) included in the received CBS message is a currently located positioning area, the positioning module 105a performs measurements of the location and location information thus measured is able to be notified by the notifying module 101c. Thereby, the management center 500 is capable of collecting the location information of the mobile device located in a given area and it is possible to realize processing to efficiently collect the location information by reducing a load on the mobile device and the network.

Moreover, in the mobile device 100a, when the determining module 103a determines that the cell ID (positioning area) included in the CBS message includes a currently located positioning area and further determines that the current time measured by the timer 104 is not past the positioning performance end time included in the CBS message, the positioning module 105 performs measurements of the location and the management center is thereby capable of collecting location information of the mobile device 100 located in a given area in a given time period. It is possible to realize processing to efficiently collect location information by reducing a load on the mobile device 100 and the network. Moreover, by acquiring location information in a given time period, it is possible to collect more detailed location information.

## Claims

1. A mobile device (100a) comprising:
receiving means (101b) for receiving a cell broadcast service, CBS, message including a positioning area;
determining means (103a) for determining whether the mobile device locates in the positioning area included in the CBS message received by the receiving means;
positioning means (105a) for performing measurement of location when it is determined by the determining means that the mobile device locates in the positioning area; and
notifying means (101c) for notifying location information measured by the positioning means;
wherein
the CBS message further includes a positioning time, and
when the determining means (103a) determines that the positioning area included in the CBS message includes a currently located positioning area and a current time is included in the positioning time included in the CBS message, the positioning means (105a) performs measurement of location.

2. A communication system (10a) comprising:
the mobile device (100a) according to claim 1; and
a location information storage apparatus for storing location information transmitted from the mobile device.

3. A communication method of a mobile device (101a) comprising:
a receiving step (S302) of receiving a cell broadcast service, CBS, message including a positioning area;
a determining step (S303) of determining whether the mobile device locates in the positioning area included in the CBS message received at the receiving step;
a positioning step (S304) of performing measurement of location when it is determined at the determining step that the mobile device locates in the positioning area; and
a notifying step (S305) of notifying location information measured at the positioning step;
wherein
the CBS message further includes a positioning time, and
when in the determining step (S303) it is determined that the positioning area included in the CBS message includes a currently located positioning area and a current time is included in the positioning time included in the CBS message, measurement of location is performed in the positioning step (S304).

## Patentansprüche

1. Eine mobile Vorrichtung (100a) aufweisend:
ein Empfangsmittel (101b) zum Empfangen einer Cell-Broadcast-Service, CBS,-Nachricht, die einen Positionierbereich enthält;
ein Bestimmungsmittel (103a) zum Bestimmen, ob sich die mobile Vorrichtung in dem Positionierbereich, der in der von dem Empfangsmittel empfangenen CBS-Nachricht enthalten ist, befindet;
ein Positioniermittel (105a) zum Ausführen einer Ortsmessung, wenn von dem Bestimmungsmittel bestimmt wird, dass sich die mobile Vorrichtung in dem Positionierbereich befindet; und
ein Mitteilungsmittel (101c) zum Mitteilen von von dem Positioniermittel gemessener Ortsinformationen;
wobei
die CBS-Nachricht ferner eine Positionierzeit aufweist und, wenn das Bestimmungsmittel (103a) bestimmt, dass der in der CBS-Nachricht enthaltene Positionierbereich einen momentan lokalisierten Positionierbereich aufweist und die in der CBS-Nachricht enthaltene Positionierzeit eine momentane Zeit aufweist, das Positioniermittel (105a) eine Ortsmessung durchführt.

2. Ein Kommunikationssystem (10a) aufweisend:
die mobile Vorrichtung (100a) gemäß Anspruch 1; und
eine Ortsinformations-Speichervorrichtung zum Speichern von Ortsinformationen, die von der mobilen Vorrichtung übermittelt werden.

3. Ein Kommunikationsverfahren einer mobilen Vorrichtung (101a) aufweisend:
einen Empfangsschritt (S302) des Empfangens einer Cell-Broadcast-Service, CBS, - Nachricht, die einen Positionierbereich enthält;
einen Bestimmungsschritt (S303) des Bestimmens, ob sich die mobile Vorrichtung in dem Positionierbereich, der in der bei dem Empfangsschritt empfangenen CBS-Nachricht enthalten ist, befindet;
einen Positionierschritt (S304) des Durchführens einer Ortsmessung, wenn in dem Bestimmungsschritt bestimmt ist, dass sich die mobile Vorrichtung in dem Positionierbereich befindet, und
einen Mitteilungsschritt (S305) des Mitteilens von in dem Positionierschritt gemessener Ortsinformationen;
wobei
die CBS-Nachricht ferner eine Positionierzeit aufweist und, wenn in dem Bestimmungsschritt (S303) bestimmt ist, dass der in der CBS-Nachricht enthaltene Positionierbereich einen momentan lokalisierten Positionierbereich aufweist und die in der CBS-Nachricht enthaltene Positionierzeit eine momentane Zeit aufweist, die Ortsmessung in dem Positionierschritt (S304) durchgeführt wird.

## Revendications

1. Dispositif mobile (100a) comprenant :
un moyen de réception (101 b) pour recevoir un message de service de diffusion cellulaire, CBS, incluant une zone de positionnement ;
un moyen de détermination (103a) pour déterminer si le dispositif mobile se situe dans la zone de positionnement incluse dans le message de service CBS reçu par le moyen de réception ;
un moyen de positionnement (105a) pour mettre en oeuvre une mesure de localisation lorsqu'il est déterminé, par le moyen de détermination, que le dispositif mobile se situe dans la zone de positionnement ; et
un moyen de notification (101c) pour notifier des informations de localisation mesurées par le moyen de positionnement ;
dans lequel :
le message de service CBS inclut en outre un instant de positionnement ; et
lorsque le moyen de détermination (103a) détermine que la zone de positionnement incluse dans le message de service CBS inclut une zone de positionnement actuellement localisée, et qu'un instant en cours est inclus dans l'instant de positionnement inclus dans le message de service CBS, le moyen de positionnement (105a) met en oeuvre une mesure de localisation.

2. Système de communication (10a) comprenant :
le dispositif mobile (100a) selon la revendication 1 ; et
un appareil de stockage d'informations de localisation destiné à stocker des informations de localisation transmises à partir du dispositif mobile.

3. Procédé de communication d'un dispositif mobile (101a), comprenant :
une étape de réception (S302) consistant à recevoir un message de service de diffusion cellulaire, CBS, incluant une zone de positionnement ;
une étape de détermination (S303) consistant à déterminer si le dispositif mobile se situe dans la zone de positionnement incluse dans le message de service CBS reçu au cours de l'étape de réception;
une étape de positionnement (S304) consistant à mettre en oeuvre une mesure de localisation, lorsqu'il est déterminé, à l'étape de détermination, que le dispositif mobile se situe dans la zone de positionnement ; et
une étape de notification (S305) consistant à notifier des informations de localisation mesurées à l'étape de positionnement ;
dans lequel
le message de service CBS inclut en outre un instant de positionnement ; et
lorsqu'il est déterminé, à l'étape de détermination (S303), que la zone de positionnement incluse dans le message de service CBS inclut une zone de positionnement actuellement localisée, et qu'un instant en cours est inclus dans l'instant de positionnement inclus dans le message de service CBS, une mesure de localisation est mise en oeuvre à l'étape de positionnement (S304).
